# EUROPÄISCHE PATENTSCHRIFT

(11) **EP 2 559 477 B1**
(45) Veröffentlichungstag und Bekanntmachung des Hinweises auf die Patenterteilung: **22.05.2013**
(21) Anmeldenummer: 11006673.5
(22) Anmeldetag: 15.08.2011
(51) Int. Cl.: B01D 63/04, B01D 65/00

(54) **Vorrichtung zum Filtern und Trennen von Strömungsmedien mittels Hohlfadenmembranelementen**
Device for filtering and separating flow media with hollow fibre membrane elements
Dispositif de filtrage et de séparation de supports d'écoulement avec des éléments à membranes à fibres creuses

(43) Veröffentlichungstag der Anmeldung: 20.02.2013
(60) Teilanmeldung: 13000435.1
(73) Patentinhaber: TIG Automation GmbH, 22529 Hamburg (DE)
(72) Erfinder: Arbeiter, Udo, 21218 Seevetal (DE)
(74) Vertreter: Niedmers, Ole

(56) Entgegenhaltungen:
- WO-A1-2005/105274
- WO-A1-2009/136165
- US-A- 5 137 631
- US-A1- 2002 074 277
- US-A1- 2005 029 192

## Beschreibung

Die Erfindung betrifft eine Vorrichtung zum Filtern und Trennen von Strömungsmedien mittels als Hohlfadenmembranen ausgebildeten Membranen, insbesondere nach der Methode der Ultrafiltration, der Umkehrosmose und der Nanofiltration, umfassend einen Einlaß für das in die Vorrichtung geführte, zu trennende Strömungsmedium und einen Auslaß zur Ausleitung des in der Vorrichtung erzeugten Permeats und einen Auslaß für das Retentat, die im wesentlichen eine Trenneinheit bildet, wobei ein Behälter vorgesehen ist. in dem wenigstens zwei Trenneinheiten aneinandergeschaltet aufgenommen werden, daß für die Zufuhr des zu trennenden Strömungsmediums zu den wenigstens beiden Trenneinheiten ein Einlaß vorgesehen ist.

Eine Vorrichtung dieser Art ist bekannt (US-A-5 137 631). Bei dieser bekannten Membrantrennvorrichtung ist, wie auch bei einer Vielzahl anderer konventioneller Membrantrennvorrichtungen bekannt, in einem Druckrohr eine Mehrzahl gesonderter Hohlfadenmembranbündel angeordnet, wobei radiale Abstände, dort "spaces" genannt, zwischen ihrem äußersten umlaufenden Bündel und der Innenwand des Druckbehälters gebildet werden. Die Hohlfadenmembranbündel benötigen keine Stabilisierung im Sinne einer Umwicklung aus elastischen Materialien, da es aufgrund des Fehlens einer Umhüllung möglich ist, daß das zugeführte, zu trennende Medium von allen Seiten die einzelnen Hohlfadenmembranen des jeweiligen Bündels barriere- bzw. widerstandsfrei umströmen kann. Das der bekannten Vorrichtung zugeführte, zu trennende Medium wird eine kreisförmige Eingangsöffnung eines die Vorrichtung durchquerenden Spannbolzens in die Vorrichtung eingeführt und durch in den Wandungen ausgebildete Perforationen in die jeweiligen Bündel aus Hohlfadenmembranen hineingeleitet, d.h. es fließt von dort in den Raum zwischen der Innenwand des Druckbehälters und der äußeren Lage der jeweiligen Hohlfadenmembranbündel.

Vorrichtungen dieser Art sind in den vielfältigsten Ausführungsformen im Stand der Technik bekannt und werden für die verschiedensten Trennaufgaben von den verschiedensten Fluidgemischen im industriellen Bereich, auf Schiffen, auf Explorationsplattformen im Meer, auf Kriegsschiffen, im Kraftfahrzeugbau, im Flugzeugbau aber auch im privaten Bereich verwendet, und zwar immer dann, wenn die Fluidgemische in ihre Bestandteile zerlegt werden sollen. So werden bspw. Vorrichtungen der eingangs genannten Art stationär aber auch auf beweglichen Einheiten wie Schiffen und dgl. verwendet, wenn bspw. Meerwasser entsalzt werden soll, um Süßwasser als Trink- oder Brauchwasser zu gewinnen. Vorrichtungen dieser Art werden aber auch stationär eingesetzt, um bspw. Sickerwasser, das bei Mülldeponien entsteht, von den schädlichen Mischungsbestandteilen derart zu trennen, daß das erzeugte Reinwasser bedenkenlos in die Umwelt entlassen werden kann.

Ein sehr weites Feld der Anwendung derartiger Vorrichtungen ist die Trennung von gasförmigen Fluidgemischen, wobei ein wichtiger Anwendungsbereich dabei die Petrochemie ist, um bspw. aus Erdgas die anteilig darin enthaltenen inerten Gase abzutrennen oder aber aus dem gasförmigen Gemisch aus Luft und gasförmigen Kohlenwasserstoffen wie Benzin und dgl. das Benzin verflüssigt herauszutrennen, wobei derartige Gemische bspw. in großen Benzinlagern bzw. Tanks oberhalb des Benzinflüssigkeitspegels entstehen, und es Aufgabe ist, den Benzinanteil durch die Membrantrennung zurückzugewinnen.

Die dafür verwendeten Membranen sind in der Regel Polymermembranen, die in der Fachwelt allgemein bekannt sind, wobei für die spezielle gewünschte Trennaufgabe jeweils unterschiedliche geeignete Membranen zur Verfügung stehen, die die gewünschte Trennaufgabe erfüllen können.

Vorrichtungen der eingangs genannten Art werden, im wesentlichen unabhängig von der Art des zu trennenden Mediums bzw. Fluidgemisches regelmäßig in hintereinander - und/oder parallel geschalteten Anordnungen installiert, um für die jeweils gewünschte Trennaufgabe eine ausreichend große Membranfläche zur Verfügung zu stellen. In der Fachwelt wird auch vielfach von Trennmodulen gesprochen, die im Hinblick auf die gewünschte Trennaufgabe zusammengeschaltet werden müssen. Das erfordert planerisch und konstruktiv sehr viel Arbeit, da jede Vorrichtung bzw. jedes Trennmodul mit dem anderen Trennmodul verbunden werden muß, und zwar durch aufwendige Rohrinstallationen, und zwar nicht nur für das zu trennende Medium, d.h. des Fluidgemisches, sondern auch für das die zusammengestellte und miteinander verbundene Vielzahl von Vorrichtungen verlassende Permeat und das diese ebenfalls verlassende Retentat.

Bei der Ultrafiltration wird das Permeat auch Filtrat genannt.

Diese Rohrverbindungen müssen höchsten Dichtigkeitsanforderungen genügen, da sie unter allen möglichen Druck- und Temperaturbedingungen, die beim Einsatz derartiger Vorrichtungen auftreten können bzw. zu erwarten sind, absolut dicht sein müssen, so daß eine Vermischung der drei Komponenten wie des zugeführten zu trennenden Mediums, des Permeats und des Retentats vermieden wird. Findet eine Vermischung von nur zwei Komponenten statt, ist die Vorrichtung bzw. die zusammengeschaltete Vielzahl von Vorrichtungen unbrauchbar und muß aufwendig demontiert, gereinigt, neu gedichtet und wiederum zusammengebaut werden. Das erfordert sehr viel Zeit, was sich in den dafür aufzuwendenden Kosten unmittelbar niederschlägt, abgesehen von dem nicht akzeptablen Grad der Unzuverlässigkeit derartiger Vorrichtungsanordnungen.

Es ist deshalb Aufgabe der vorliegenden Erfindung, eine Vorrichtung der eingangs genannten Art bereitzustellen, bei der eine Mehrzahl von Vorrichtungen derart verbunden zusammengefaßt werden können, daß der Verbindungsaufwand dieser Vorrichtungen auf ein Minimum reduziert werden kann und die Betriebssicherheit derartiger Vorrichtungen gegenüber den bekannten Vorrichtungen signifikant erhöht werden kann, auch mit dem Ziel, die Herstellungskosten derartiger Vorrichtungsanordnungen zu minimieren und den dafür bisher benötigten Raumbedarf ebenfalls zu minimieren, so daß bei insgesamt erhöhter Betriebssicherheit die Gestehungs- und Wartungskosten erheblich vermindert werden können, was ebenfalls für die Montage- und Demontagekosten gelten soll.

Gelöst wird die Aufgabe gem. der Erfindung dadurch, daß jede Trenneinheit ein Gehäuse, in dem die als Hohlfadenmembranen oder auch als Kapillarmembranen ausbildbaren Membranen zwischen zwei voneinander beabstandeten Endplatten angeordnet sind, aufweist, und daß für die Zufuhr des zu trennenden Strömungsmediums zu den beide Trenneinheiten jeweils durchquerenden, Bohrungen aufweisenden Rohren, die über die Bohrungen mit dem Gehäuseinneren in Verbindung stehen, ein gemeinsamer Einlaß vorgesehen ist, wobei das Retentat am Auslaß des einen Endes des Rohres abgeleitet wird und das Permeat über die offenen Enden der Hohlfadenmembranen.

Der Vorteil der erfindungsgemäßen Lösung ist, daß wenigstens zwei Trenneinheiten ohne Installationsaufwand an Rohren aneinandergekoppelt bzw. miteinander verbunden werden können, ohne daß gesonderte Rohrverbindungen für die Zufuhr des zu trennenden Mediums, d.h. des Fluids, in der Fachwelt auch "feed" genannt, erforderlich sind. Die beiden Trenneinheiten werden lediglich in den Behälter eingebracht und werden mit dem im Behälter vorinstallierten Verbindungsmitteln aneinandergekoppelt. Diese Installation gewährleistet, daß fortwährend eine druckdichte Verbindung zwischen dem Zulauf für das zu trennende Medium und von dort zu den beiden Trenneinheiten möglich ist. Zumindest für zwei Trenneinheiten ist darüber hinaus kein Installationsaufwand nötig, was zur Folge hat, daß auch die Möglichkeiten des Auftretens von Undichtigkeiten drastisch reduziert werden und hinzukommt, daß auch eine beträchtliche Gewichtsverminderung der Gesamtvorrichtung gegenüber den bekannten Vorrichtungen erreicht wird. Die erfindungsgemäße Lösung ermöglicht Anwendungen der Vorrichtung, die bisher aufgrund der stark reduzierten äußeren Abmaße und des Gewichts nicht möglich waren, bspw. auf beweglichen Einheiten aber auch auf maritimen Plattformen, wo um jedes zusätzliche Gewicht gegeizt wird, was gleichermaßen für das für die Vorrichtung benötigte Raumvolumen gilt. Die erfindungsgemäße Vorrichtung kann selbst wiederum nach Art eines Baukastenprinzips mit einer Mehrzahl der erfindungsgemäßen Vorrichtungen ohne großen Installationsaufwand zu großen gewünschten Trenneinheiten zusammengeschaltet werden, je nach der gewünschten Membrangesamtfläche.

Wie eingangs erwähnt, kommen für derartige Trenn- und Filteraufgaben für Strömungsmedien bzw. Fluide die für die spezielle Trennaufgabe herangezogenen Membranen bzw. Membranelemente zur Anwendung. Es kommt aber nicht nur auf die Ausbildung der Membran im Hinblick auf das zu verwendende Membranmaterial, in der Regel aus kohlenwasserstoffbasierten Polymeren bestehend, an, sondern auch auf die Art der Membranen in bezug auf ihren mechanischen Aufbau. So ist es sinnvoll, die Membranen als Hohlfaden- und/oder Kapillarmembranen auszubilden.

Die erfindungsgemäße Lösung erfüllt alle Punkte der Aufgabe, wie sie vorangehend dargelegt worden ist.

Vorteilhafterweise ist der Behälter derart ausgebildet, daß die Trenneinheiten im wesentlichen auf einer Behälterachse hintereinanderliegend angeordnet sind. Dadurch wird erreicht, daß die Zufuhr des zu trennenden Mediums zu beiden Trenneinheiten auf eine minimale Leitverbindung für das zu trennende Medium bzw. des Fluids in die Trenneinheiten hinein nötig ist.

Besonders vorteilhaft ist es, wenn der Einlaß für das zu trennende Strömungsmedium derart am Behälter angeordnet ist, daß von diesem das Strömungsmedium gleichzeitig sowohl in die eine Trenneinheit als auch in die andere Trenneinheit leitbar ist, quasi im Sinne einer Einleitung des zu trennenden Mediums über eine quasi T-förmig ausgebildete Verbindung in der Trenneinheit.

Der Behälter selbst kann im wesentlichen rohrförmig ausgebildet sein, obwohl im Prinzip auch andere Ausgestaltungen möglich sind, bspw. derart, daß die beiden Trenneinheiten faktisch nebeneinander angeordnet werden. Die im wesentlichen rohrförmige Ausbildung des Behälters ermöglicht aber eine schnelle, sichere Installation der Trenneinheiten im Behälter selbst, wobei die Trenneinheiten sich in dem Behälter selbsttätig stabilisieren, so daß keine aufwendigen Befestigungs- und Ausrichtmittel innerhalb des Behälters für die Trenneinheiten nötig sind, wodurch die Gestehungskosten und die Reparatur- und Wartungskosten nochmals reduziert werden können.

Bei einer noch vorteilhafteren Ausführungsform der Vorrichtung weist der Behälter einen im wesentlichen kreisförmigen Querschnitt auf, d.h. er ist vorteilhafterweise als im wesentlichen lineares Rohr ausgebildet, so daß sich die in den Behälter einzubringenden Trenneinheiten faktisch in Reihe hintereinander angeordnet selbsttätig stabilisieren und ausrichten. Hintereinander bedeutet nicht, daß die Trenneinheiten in bezug auf ihre Trennfunktion hintereinandergeschaltet sind bzw. immer sein müssen, sondern lediglich, daß sie mechanisch derart angeordnet sind, daß sie quasi in Reihe hintereinanderliegen.

Bei einer noch anderen vorteilhaften Ausführungsform der Vorrichtung ist an im wesentlichen gegenüberliegenden Orten des Behälters jeweils ein Einlaß für das zu trennende Strömungsmedium vorgesehen, d.h. vorzugsweise sind die Orte der Einlässe, bezogen auf die Längsausdehnung des Behälters, wenn dieser bspw. rohrförmig ausgebildet ist, im wesentlichen mittig positioniert, so daß durch die zweifachen Einlässe der Gesamteinlaßquerschnitt für das zu trennende Medium in den Behälter hinein auf einfache Weise vergrößert werden kann, um den Fluß des Strömungsmediums durch den Behälter auf einfache Weise vergrößern zu können, um diesen auf die jeweilige gewünschte höhere Trennleistung auf einfache Weise anpassen zu können.

Die Auslässe für das Permeat sind vorteilhafterweise an im wesentlichen gegenüberliegenden Enden des Behälters ausgebildet, so daß die notwendige Installation für die Abfuhr des Permeats gering gehalten werden kann und auch der Behälter insgesamt nach Art einer Batterie aus einer Mehrzahl von Behältern in eine entsprechend ausgebildete große Trenneinheit eingesetzt werden kann. Die Auslässe selbst werden, mit entsprechenden Dichtungsmitteln versehen, in Aufnahmen, die ebenfalls Dichtungsmittel aufweisen können, hineingesteckt, ohne daß es zusätzlicher Installationen bedarf.

Vorteilhafterweise sind die Auslässe für das Retentat im Bereich von im wesentlichen gegenüberliegenden Enden im wesentlichen quer zum Behältergehäuse ausgebildet, die, mit Dichtmitteln versehenen Aufnahmen, die ebenfalls Dichtmittel aufweisen können und die ebenfalls in einer großen Trenneinheit angeordnet sind, in einer Richtung im wesentlichen quer zum Behältergehäuse hineingesteckt werden können, ohne daß es für die Sammlung des aus dem Behälter austretenden Retentats weiterer Installationsmittel bedarf.

Im Hinblick auf die Nachteile von im Stand der Technik bekannten Vorrichtungen, u.a. wegen ihres beträchtlichen

Gewichtes, war erfindungsgemäß angestrebt worden, mit der Erfindung das Gewicht insgesamt zu reduzieren, was vorteilhafterweise dadurch erreicht wird, wenn man den Behälter aus Kunststoff ausbildet, wobei es insbesondere vorteilhaft ist, zur weiteren Verminderung des Gewichtes des dafür benötigten Kunststoffes diesen mit Carbonfasern oder mit Glasfasern verstärkt auszubilden. Zudem hat der Kunststoff für die Ausbildung des Behälters den Vorteil, daß dieser im wesentlichen weitgehend korrosionsbeständig im Hinblick auf das zu trennende Medium bzw. des Fluidgemisches, da flüssig oder gasförmig, ist und in dem erwartbaren Temperaturbereich auch ausreichend formstabil bei geringem Gewicht ist.

Da die Trenneinheiten, die in dem Behälter aufgenommen werden, jeweils von einem Gehäuse aufgenommen werden, das hinreichend druckstabil sein muß, besteht das Gehäuse und/oder bestehen die beiderseitigen Abschlußelemente der Trenneinheit aus Metall, womit auch die Formstabilität der Trenneinheit selbst ausreichend gewährleistet ist, um eine Verformung der im Gehäuse der Trenneinheit aufgenommenen Membranelemente fortwährend zu gewährleisten, zumindest das Gehäuse, vielfach auch Druckrohr genannt, kann auch aus Kunststoff bzw. glasfaserverstärktem Kunststoff bestehen. Die beiderseitigen Abschlußelemente, auch Endplatten genannt, bestehen regelmäßig aus Aluminium. Da bekanntermaßen Stahl zwar sehr gute Festigkeitseigenschaften aufweist, sind bisher sowohl das Gehäuse der Trenneinheiten als auch die dort in der Regel vorgesehenen beiderseitigen Abschlußelemente eben aus Stahl ausgebildet. Da Stahl aber ein beträchtliches spezifisches Gewicht aufweist und dem eingangs gestellten Ziel im Prinzip in bestimmten Fällen zuwiderläuft, eine Vorrichtung auszubilden, die leichter als die bekannten ist, ist es gem. der Erfindung vorteilhaft, wenigstens die beiderseitigen Abschlußelemente aus Titan auszubilden.

Um die Trenneinheiten schnell und im wesentlichen werkzeugfrei im Behältergehäuse für die Zwecke der Montage und der Demontage einzubringen bzw. für Reparatur- und Wartungszwecke entfernen zu können, ist das Behältergehäuse vorteilhafterweise in wenigstens zwei Behältergehäuseelemente teilbar, die wiederum über Verbindungsmittel miteinander verbindbar sind, wobei diese Verbindungsmittel an sich beliebiger geeigneter Art sein können, bspw. in Form von Paß- oder Steckverbindungen, ganz besonders vorteilhaft ist es aber, die Verbindungsmittel an den Behältergehäuseelementen mittels dort auszubildender Gewindebereiche und/oder Renkverbindungen auszubilden. Gewindeverbindungen sind selbsttätig zentrierend und arretierend, was gleichermaßen für Renkverbindungen gilt, so daß keine zusätzlichen Mittel zur Befestigung der beiden Gehäuseelemente nötig sind, wodurch aufgabengemäß Gewicht gespart werden kann und Montage- und Demontagetätigkeiten auf ein Minimum reduziert werden können.

Aus der US-A-2002/0074 277 ist eine Membrantrennvorrichtung bekannt, bei der in einem Gehäuse ein oder mehrere Membranfiltereinheiten, dort mit "membrane filter body" bezeichnet, eingesetzt sind. Die Membran- bzw. Filtereinheiten werden dort durch sogn. Wickelmembranen bzw. Wickelmembrankörper gebildet, es werden dort aber auch Membranen als dort verwendbar erwähnt, die zum Erreichen einer gewissen Eigenstabilität mit Kunststoffband oder ähnlichem umwickelt worden sind. Ein gesondertes Gehäuse für die Trenneinheit gem. der Erfindung fehlt und ist auch wegen des anderen Ziels der bekannten Vorrichtung nicht nötig.

Die Erfindung wird nun unter Bezugnahme auf die nachfolgenden schematischen Zeichnungen anhand eines Ausführungsbeispieles und einer Modifikation des Ausführungsbeispieles im einzelnen beschrieben. Darin zeigen:
- Fig. 1: in perspektivischer Darstellung die erfindungsgemäße Vorrichtung, umfassend einen aus zwei Behältergehäuseelementen bestehenden Behälter zur Aufnahme zweier Trenneinheiten,
- Fig. 2: in der Seitenansicht in teilweisem Schnitt unter Weglassen von Einzelheiten eine Trenneinheit, die mit Membranen in Form von Hohlfadenmembranen und/oder Kapillarmembranen bestückt ist,
- Fig. 3: den in Fig. 1 dargestellten Behälter zur Aufnahme zweier Trenneinheiten in teilweisem Schnitt und in teilweisem Ausschnitt,
- Fig. 4: eine Ansicht auf die Stirnseite des Behälters gem. Fig. 3,
- Fig. 5 a und 5 b: in der Seitenansicht gem. Fig. 3 in jeweils um 90° gedrehter Darstellung,

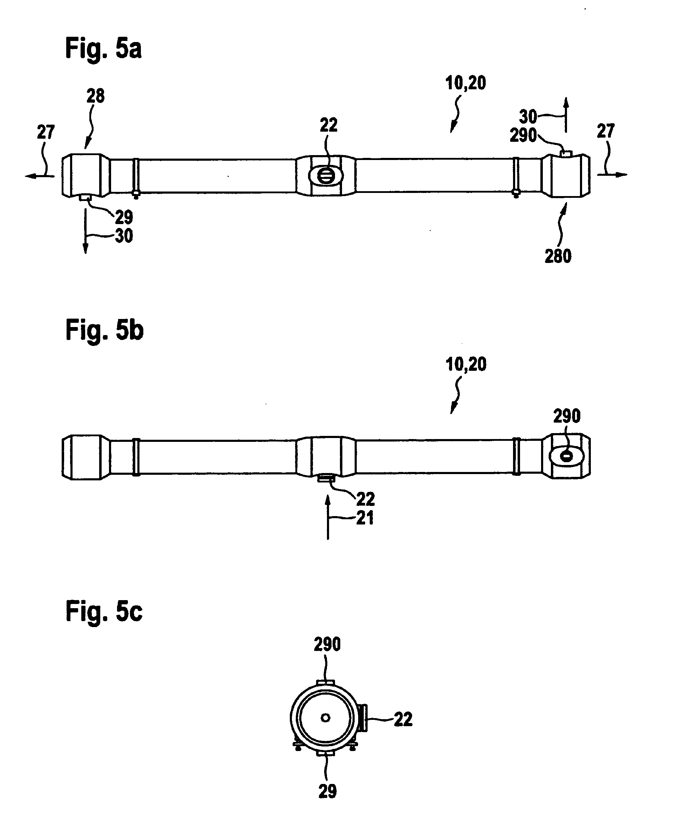

- Fig. 5 c: eine Ansicht von der Stirnseite der Fig. 5 a und 5 b und

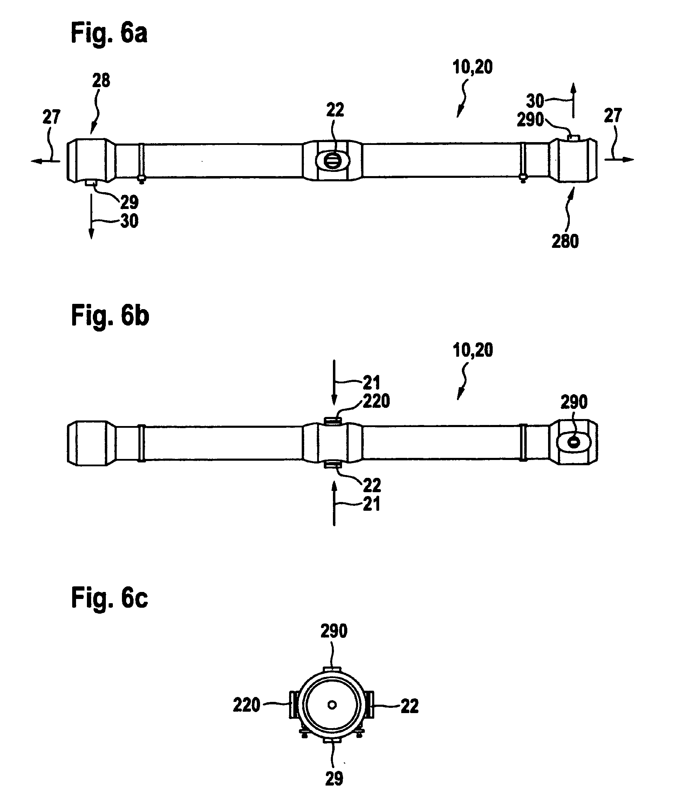

- Fig. 6 a bis 6 c: eine Darstellung analog den Fig. 5 a bis 5 c, jedoch mit zwei Einlässen für das zu trennende Strömungsmedium.

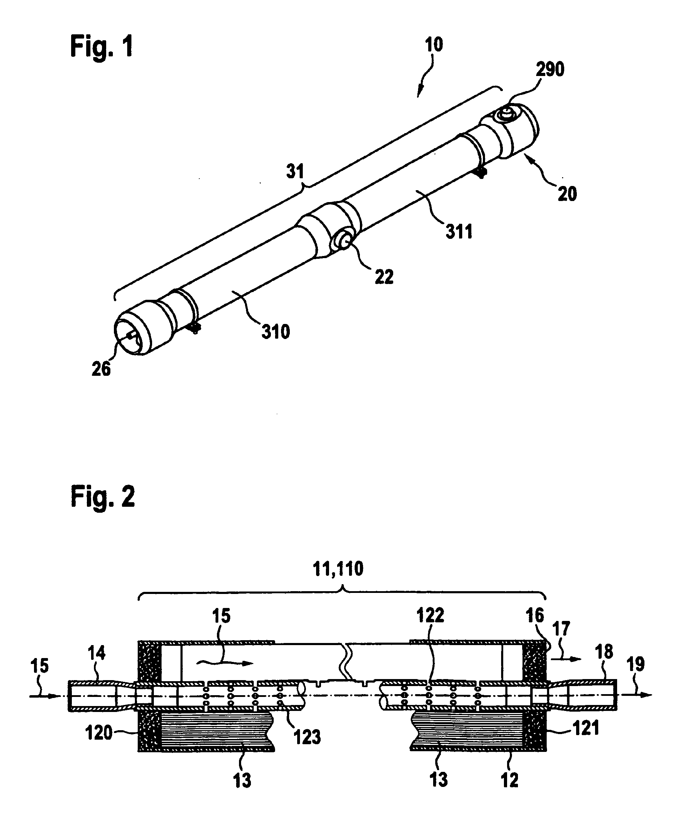

Es wird zunächst auf die Fig. 1 und 2 Bezug genommen, um den grundsätzlichen Aufbau der Vorrichtung 10 darzulegen.

In Fig. 1 ist der Behälter 20 der Vorrichtung 10 in perspektivischer Darstellung gezeigt, wobei das Behältergehäuse 31 in zwei Behältergehäuseelemente 310, 311 aufgeteilt ist. In den Behältergehäuseelementen 310, 311 wird jeweils eine Trenneinheit 11, 110 aufgenommen, wobei die Trenneinheiten 11, 110 regelmäßig einen identischen Aufbau haben, es sind aber auch Lösungen der Vorrichtung 10 denkbar, bei denen die Trenneinheiten 11, 110 einen unterschiedlichen Aufbau haben und jeweils unterschiedliche Trennspezifika bzgl. des gemeinsam in einen Einlaß 22 für beide Trenneinheiten 11, 110 zugeführten Strömungsmedium 21, das vielfach auch Fluid oder "feed" genannt wird, haben.

Der grundsätzliche Aufbau einer Trenneinheit 11, 110, wie sie beispielhaft in Fig. 2 dargestellt ist, ist allgemein bekannt, wobei die in Fig. 2 dargestellte Trenneinheit 11, 110 mit Membranen 13 in Form von Hohlfaden- und/oder Kapillarmembranen bestückt ist. Die Trenneinheit 11, 110 weist grundsätzlich ein Gehäuse 12 auf, das den Drücken des Strömungsmediums 15 innerhalb des Gehäuses standhalten kann und ist in der Regel aus Kunststoff bzw. faserverstärktem Kunststoff ausgebildet, kann aber auch aus Stahl, in Form eines Stahlrohres, ausgebildet sein. An beiden Enden des Gehäuses sind auf an sich bekannte Weise Abschlußelemente 120, 121 vorgesehen, zwischen denen die Hohlfaden- bzw. Kapillarmembranen 13 aufgespannt sind, s. Fig. 2. Zusammen mit dem Gehäuse 12 bilden die geeignet auf Abstand voneinander gehaltenen Abschlußelemente 120, 121 einen druckdichten Raum, in dem das zu trennende Strömungsmedium 15 strömt. In der Regel durchquert bei derartigen Trenneinheiten 11, 110 das Gehäuse 12 ein zentrales Rohr 122, das über dem Umfang verteilt Löcher 123 aufweist, die die Wandung des Rohres 122 durchqueren. In diesem zentralen Rohr 122 wird das Permeat 17 gesammelt und abgeführt.

Wenn die Membranen 13 als Hohlfadenmembranen ausgebildet sind, durchfließt das Strömungsmedium 15 die Hohlfäden, wobei das Permeat 17 vom Hohlraum aus die Wandungen der Hohlfadenmembran von innen nach außen durchquert.

Über einen Einlaß 14, der außerhalb des Abschlußelementes 120 angeordnet ist, und der mit dem Rohr 122 verbunden ist, wird das zu trennende Strömungsmedium 15 in das Rohr 122 hineingeführt und dringt durch die Löcher 123 in den Innenraum des Gehäuses 12, in dem die Membranen 13 angeordnet sind. Das Strömungsmedium 15 durchquert auf an sich bekannte Weise die Wandungen der Membranen bzgl. des Gemischanteils im Strömungsmedium 15, für das die Membranen 13 selektiv sind. Innerhalb der Membranen 13, d.h. im Hohlraum der Hohlraummembranen oder der Kapillarmembranen bzgl. des hier beschriebenen Beispiels, wird das darin gesammelte Permeat 17 an einem, ggf. auch an beiden Enden des Gehäuses 12 gesammelt (hier nicht im einzelnen dargestellt), und wird über einen Auslaß 16 als Permeat 17 nach außen abgeführt.

Das die Trenneinrichtung 11 über den Auslaß 18 in Verlängerung des Rohres 122 verlassende, aufkonzentrierte Strömungsmedium 15, d.h. das verbleibende Strömungsmedium 15, das um den durch die Membranen 13 permeierte Anteil vermindert ist, wird als Retentat 19 aus dem Gehäuse 12 in Verlängerung des Rohres 22 ausgeführt.

Es sei darauf hingewiesen, daß der vorangehend beschriebene schematische Aufbau derartiger Trenneinheiten 11 in dieser und in ähnlicher Form der Fachwelt allgemein bekannt ist, so daß auf den Aufbau der Trenneinheit 11 hier nicht weiter eingegangen zu werden braucht. Es sei aber dennoch erwähnt, daß gem. der hier dargestellten Vorrichtung 10 die beiderseitigen Abschlußelemente 120, 121 und/oder das Gehäuse 12 bspw. aus Gründen der Gewichtsverminderung einerseits sowie der mechanischen Stabilität und der chemischen Stabilität gegenüber dem Strömungsmedium 15 anstelle von Stahl aus Aluminium oder aus Titan hergestellt sein können, das bei höherer Festigkeit als hochlegierter Stahl ein sehr viel geringeres Gewicht aufweist.

Die beschriebene Trenneinheit 11 kann in Abhängigkeit verschiedener Typen von Membranen, d.h. Hohlfadenmembranen oder Kapillarmembranen, auf an sich gleiche Weise, wie beschrieben, betrieben werden. In Abhängigkeit der verschiedenen verwendeten Membrantypen erfolgt die Zufuhr vom zu trennenden Strömungsmedium 15 sowie die Abfuhr von Permeat 17 sowie vom Retentat 19 in abgewandelter Weise, was aber an dem vorbeschriebenen Trennprinzip des zu trennenden Strömungsmediums 15 nichts ändert.

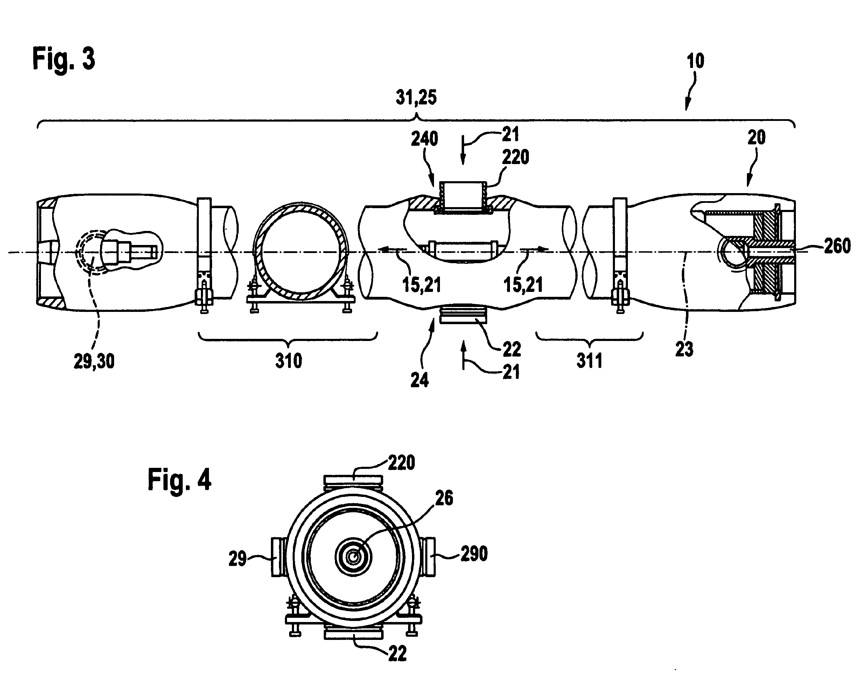

In Fig. 3 ist der Behälter 20 zur Aufnahme zweier Trenneinheiten 11, 110 dargestellt. Der Behälter 20 besteht im wesentlichen aus einem rohrförmigen Körper mit im wesentlichen kreisförmigem Innenquerschnitt, so daß die Trenneinheiten 11, 110 darin geführt aufgenommen werden können, da der Querschnitt der Trenneinheiten 11, 110 im wesentlichen dem Innenquerschnitt des Behälters 20 entspricht. Bezogen auf die Längsausdehnung 25 des Behälters, dessen eigentliches Behältergehäuse 31, wie schon im Zusammenhang mit der Beschreibung der Fig. 1 erwähnt, umfaßt der Behälter 20 zwei im wesentlichen gleich große Behältergehäuseelemente 310, 311, wobei im wesentlichen in der Mitte zwischen den beiden Behältergehäuseelementen 310, 311 wenigstens ein Einlaß 22 für das Strömungsmedium 21 vorgesehen ist und wobei das Strömungsmedium 21 dasselbe wie das Strömungsmedium 15 ist, wie es im Zusammenhang mit der Beschreibung der Trenneinheit 11 oben beschrieben worden war.

Wenn die beiden Trenneinheiten 11 innerhalb des Behälters 20 positioniert sind, strömt das Strömungsmedium 21 über den Einlaß 22 in den Einlaß 14 der jeweiligen Trenneinheiten 11, 110. Das ist symbolisch durch die Pfeile 15, 21 beidseitig des Einlasses 22 in Fig. 3 dargestellt. Die Verbindung zwischen dem Einlaß 22 des Behälters 20 und die jeweiligen Trenneinheiten 11, 110 wird durch entsprechende konstruktive Ausbildung sowohl des Einlasses 14 der Trenneinheiten 11, 110 als auch durch entsprechende konstruktive Ausbildung des Einlasses 22 innerhalb des Behälters 20 sichergestellt, so daß eine mechanisch sichere Verbindung und eine druckdichte Verbindung zwischen dem Einlaß 22 und dem Einlaß 14 sichergestellt ist.

An den beiden Enden 28, 280 des Behälters 20, s. insbesondere die Fig. 5 a bis 6 c, sind jeweilige Auslässe 26, 260 für das die Vorrichtung 10 bzw. den Behälter 20 verlassende Permeat 27 vorgesehen, das zur anderweitigen Verwendung, ggf. einer nochmaligen Trennung unterworfen wird oder aber abgeführt und gesammelt wird. In der Re - gel sind die Auslässe 26, 260 konzentrisch zur den Behälter 20 durchquerenden gedachten Behälterachse 23 angeordnet.

Ebenfalls im Bereich der Enden 28, 280 des Behälters 20 bzw. des Behältergehäuses 31 sind, im wesentlichen radial aus dem Behältergehäuse austretend, jeweils Auslässe 29, 290 für das die Vorrichtung 10 verlassende Retentat 30 vorgesehen, wobei das Retentat 30 entweder dem Trennkreislauf erneut zugeführt wird oder anderweitig gesammelt und einer anderweitigen Nutzung zugeführt wird.

Die in den Fig. 5 a bis 5 c dargestellte Vorrichtung 10 umfaßt an ihren beiden Enden 28, 280 des Behälters 20 jeweils einen Auslaß 29, 290 für das Retentat 30, wie zuvor beschrieben, was gleichermaßen für die Vorrichtungen gem. den Fig. 6 a bis 6 c gilt. Ein Auslaß, 29 oder 290, kann bei einer anderen Betriebsweise der Vorrichtung 10 auch als Entlüftung des Gehäuses 22 der Trenneinheit 11 bzw. Trenneinheiten 11, 110 und/oder des Behälters 20 bzw. des Behältergehäuses dienen.

Bei einer mit "Dead-End-Betrieb" bezeichneten Betriebsweise der Vorrichtung 10 sind die Auslässe 29, 290 geschlossen. Bei einer anderen Betriebsweise, dem sog. "Cross-Flow-Betrieb", sind die Auslässe 29, 290 zur Abfuhr des Retentats 30 geöffnet.

Bei der Ausgestaltung der Vorrichtung 10 gem. den Fig. 6 a bis 6 c ist jedoch gegenüber der Ausgestaltung der Vorrichtung 10 gem. den Fig. 5 a bis 5 c am Ort 24, 240 jeweils ein Einlaß 22, 220 für das Strömungsmedium 21 vorgesehen, und zwar sich diametral in radialer Richtung zur Behälterachse 23 gegenüberliegend. Diese Ausgestaltung der Vorrichtung 10 ist auch in Fig. 3 und in Fig. 4 dargestellt. Dadurch ist gegenüber der Ausführungsform der Vorrichtung 10 mit nur einem Einlaß 22 für das Strömungsmedium 21 ein höherer Durchsatz des Strömungsmediums 21 durch die Vorrichtung 10 pro Zeit und eine verbesserte Parallelverteilung des zugeführten zu trennenden Strömungsmediums 21 auf die beiden bzw. mehrere Trenneinheiten 11, 110 möglich.

Wie schon erwähnt, umfaßt der Behälter 20 wenigstens zwei Behältergehäuseelemente 310, 311, die an dem mittleren Abschnitt des Behältergehäuses 31 jeweils über Gewindeverbindungen und/oder Renkverbindungen angeschlossen werden können (nicht dargestellt). Derart lösbare bzw. trennbare Verbindungen gestatten es, das Behältergehäuse 31 leicht zu demontieren und zu montieren, um bspw. einen schnellen Zugang zu den darin aufgenommenen Trenneinheiten 11, 110 zu haben, d.h. für Reparatur- und Wartungszwecke aber auch zur grundsätzlichen Erstmontage. Das Behältergehäuse 21 besteht im wesentlichen aus Kunststoff, und zwar aus carbonfaser- bzw. glasfaserverstärktem Kunststoff, wobei das erstgenannte den Vorteil einer hohen Festigkeit bei geringem Gewicht hat.

Alle Auslässe 26, 260 für das Permeat 27 und alle Auslässe 29, 290 für das Retentat 30 sind ebenso wie die Einlässe 22, 220 für das zu trennende Strömungsmedium 21 derart konstruktiv ausgestaltet, daß sie eine schnelle, druckdichte Verbindung mit weiteren Vorrichtungen 20 ermöglichen, wenn bspw. eine Mehrzahl von Vorrichtungen entweder parallel oder in Reihe oder sowohl teilweise parallel als auch teilweise in Reihe in einer hier nicht dargestellten Trenneinheit bzw. Trennbatterie zusammengeschaltet werden sollen.

## Patentansprüche

1. Vorrichtung (10) zum Filtern und Trennen von Strömungsmedien (15) mittels als Hohlfadenmembranen ausgebildeten Membranen (13), insbesondere nach der Methode der Ultrafiltration, der Umkehrosmose und der Nanofiltration, umfassend einen Einlaß (14) für das in die Vorrichtung (10) geführte, zu trennende Strömungsmedium (15) und einen Auslaß (16) zur Ausleitung des in der Vorrichtung (10) erzeugten Permeats (17) und einen Auslaß (18) für das Retentat (19), die im wesentlichen eine Trenneinheit (11) bildet, wobei ein Behälter (20) vorgesehen ist, in dem wenigstens zwei Trenneinheiten (11) aneinandergeschaltet aufgenommen werden, daß für die Zufuhr des zu trennenden Strömungsmediums (21) zu den wenigstens beiden Trenneinheiten (11) ein Einlaß (22) vorgesehen ist, **dadurch gekennzeichnet, daß** jede Trenneinheit (11) ein Gehäuse (12), in dem die als Hohlfadenmembranen oder auch als Kapillarmembranen ausbildbaren Membranen (13) zwischen zwei voneinander beabstandeten Endplatten (120, 121) angeordnet sind, aufweist, und daß für die Zufuhr des zu trennenden Strömungsmediums (21) zu den beide Trenneinheiten (11) jeweils durchquerenden, Bohrungen (123) aufweisenden Rohren (122), die über die Bohrungen (123) mit dem Gehäuseinneren in Verbindung stehen, ein gemeinsamer Einlaß (22) vorgesehen ist, wobei das Retentat (19) am Auslaß (18) des einen Endes des Rohres (122) abgeleitet wird und das Permeat (17) über die offenen Enden der Hohlfadenmembranen (13).

2. Vorrichtung nach Anspruch 1, **dadurch gekennzeichnet, daß** der Behälter (20) derart ausgebildet ist, daß die Trenneinheiten (11) im wesentlichen auf einer Behälterachse (23) hintereinanderliegend angeordnet sind.

3. Vorrichtung nach einem oder beiden der Ansprüche 1 oder 2, **dadurch gekennzeichnet, daß** der Einlaß (22) für das zu trennende Strömungsmedium (21) derart am Behälter (20) angeordnet ist, daß von diesem das Strömungsmedium (21) gleichzeitig sowohl in die eine Trenneinheit (11) als auch in die andere Trenneinheit (110) leitbar ist.

4. Vorrichtung nach einem oder mehreren der Ansprüche 1 bis 3, **dadurch gekennzeichnet, daß** der Behälter (20) im wesentlichen rohrförmig ausgebildet ist.

5. Vorrichtung nach einem oder mehreren der Ansprüche 1 bis 4, **dadurch gekennzeichnet, daß** der Behälter (20) einen im wesentlichen kreisförmigen Querschnitt aufweist.

6. Vorrichtung nach einem oder mehreren der Ansprüche 1 bis 5, **dadurch gekennzeichnet, daß** der Behälter (20) als im wesentlichen lineares Rohr ausgebildet ist.

7. Vorrichtung nach einem oder mehreren der Ansprüche 1 bis 6, **dadurch gekennzeichnet, daß** an im wesentlichen gegenüberliegenden Orten (24, 240) des Behälters (20) jeweils ein Einlaß (22, 220) für das zu trennende Strömungsmedium (21) vorgeschaltet ist.

8. Vorrichtung nach Anspruch 7, **dadurch gekennzeichnet, daß** die Orte (24, 240) der Einlässe (22, 220), bezogen auf die Längsausdehnung (25) des Behälters (20), im wesentlichen mittig positioniert sind.

9. Vorrichtung nach einem oder mehreren der Ansprüche 1 bis 8, **dadurch gekennzeichnet, daß** die Auslässe (26, 260) für das Permeat (27) an im wesentlichen gegenüberliegenden Enden (28, 280) des Behälters (20) angeordnet sind.

10. Vorrichtung nach einem oder mehreren der Ansprüche 1 bis 9, **dadurch gekennzeichnet, daß** die Auslässe (29, 290) für das Retentat (30) im Bereich von im wesentlichen gegenüberliegenden Enden (28, 280) im wesentlichen quer zum Behältergehäuse (31) angeordnet sind.

11. Vorrichtung nach einem oder mehreren der Ansprüche 1 bis 10, **dadurch gekennzeichnet, daß** der Behälter (20) aus Kunststoff besteht.

12. Vorrichtung nach Anspruch 11, **dadurch gekennzeichnet, daß** der Kunststoff carbonfaser- und/oder glasfaserverstärkter Kunststoff ist.

13. Vorrichtung nach einem oder mehreren der Ansprüche 1 bis 12, **dadurch gekennzeichnet, daß** das Gehäuse (12) und/oder beiderseitige Abschlußelemente (120, 121) der Trenneinheit (11) aus Metall bestehen.

14. Vorrichtung nach Anspruch 13, **dadurch gekennzeichnet, daß** wenigstens die beiderseitigen Abschlußelemente (120, 121) aus Titan bestehen.

15. Vorrichtung nach einem oder mehreren der Ansprüche 1 bis 14, **dadurch gekennzeichnet, daß** das Behältergehäuse (31) in wenigstens zwei Behältergehäuseelemente (310, 311) teilbar ist, die über Verbindungsmittel miteinander verbunden sind.

16. Vorrichtung nach Anspruch 15, **dadurch gekennzeichnet, daß** die Verbindungsmittel an den Behältergehäuseelementen (310, 311) ausgebildete Gewindebereiche oder Renkverbindungen sind.

17. Vorrichtung nach einem oder mehreren der Ansprüche 1 bis 16, **dadurch gekennzeichnet, daß** die Einlässe (22, 220) für das Strömungsmedium (21) und/oder die Auslässe (26, 260) für das Permeat (27) und/oder die Auslässe (29, 290) für das Retentat (30) aus Metall bestehen.

18. Vorrichtung nach Anspruch 17, **dadurch gekennzeichnet, daß** das Metall Stahl ist.

19. Vorrichtung nach Anspruch 17, **dadurch gekennzeichnet, daß** das Metall Titan ist.

## Claims

1. Device (10) for filtering and separating flow media (15) by means of membranes (13) in the form of hollow-fibre membranes, in particular according to the method of ultrafiltration, reverse osmosis and nanofiltration, comprising an inlet (14) for the flow medium to be separated (15) that is fed into the device (10), an outlet (16) to discharge the permeate (17) generated in the device (10) and an outlet (18) for the retentate (19), essentially forming a separation unit (11), whereby there is provided a vessel (20) in which are accommodated at least two separation units (11) joined together, in that there is provided an inlet to supply the flow medium (21) to be separated to the at least two separation units (11), **characterised in that** each separation unit (11) has a housing (12) in which the membranes (13), embodiable as hollow-fibre membranes or as capillary membranes, are arranged between two end-plates (120, 121) spaced a distance apart from one other, and **in that** there is provided a common inlet (22) to supply the flow medium (21) to be separated to the pipes (122) passing through each of the two separation units (11) and provided with holes (123) and which are connected to the interior of the housing via the holes (123), whereby the retentate (19) is conveyed out at the outlet (18) of one end of the pipe (122) and the permeate (17) through the open ends of the hollow-fibre membranes (13).

2. Device according to Claim 1, **characterised in that** the vessel (20) is constructed in such a way that the separation units (11) are arranged in sequence on a vessel axis (23).

3. Device according to one or both of Claims 1 or 2, **characterised in that** the inlet (22) for the flow medium (21) to be separated is arranged on the vessel (20) in such a way that the flow medium (21) is simultaneously conveyable from it both into the one separation unit (11) and also into the other separation unit (110).

4. Device according to one or more of Claims 1 to 3, **characterised in that** the design of the vessel (20) is essentially tubular.

5. Device according to one or more of Claims 1 to 4, **characterised in that** the vessel (20) has an essentially circular cross-section.

6. Device according to one or more of Claims 1 to 5, **characterised in that** the vessel (20) is constructed as an essentially linear tube.

7. Device according to one or more of Claims 1 to 6, **characterised in that** an inlet (22, 220) for the flow medium (21) to be separated is located upstream at each of the locations (24, 240) of the vessel (20) lying essentially opposite to one another.

8. Device according to Claim 7, **characterised in that** the locations (24, 240) of the inlets (22, 220) are positioned essentially centrally relative to the longitudinal dimension (25) of the vessel (20).

9. Device according to one or more of Claims 1 to 8, **characterised in that** the outlets (26, 260) for the permeate (27) are arranged at essentially opposite ends (28, 280) of the vessel (20).

10. Device according to one or more of Claims 1 to 9, **characterised in that** the outlets (29, 290) for the retentate (30) are arranged in the area of ends (28, 280) lying essentially opposite to one another and essentially at right angles to the vessel housing (31).

11. Device according to one or more of Claims 1 to 10, **characterised in that** the vessel (20) consists of plastic.

12. Device according to Claim 11, **characterised in that** the plastic is plastic reinforced with carbon fibre and/or glass fibre.

13. Device according to one or more of Claims 1 to 12, **characterised in that** the housing (12) and/or the closure elements (120, 121) on both sides of the separation unit (11) consist of metal.

14. Device according to Claim 13, **characterised in that** at least the closure elements (120, 121) at both ends consist of titanium.

15. Device according to one or more of Claims 1 to 14, **characterised in that** the vessel housing (31) is divisible into at least two vessel housing elements (310, 311) that can be joined together via connectors.

16. Device according to Claim 15, **characterised in that** the connectors constructed on the vessel housing elements (310, 311) are threaded areas or bayonet connectors.

17. Device according to one or more of Claims 1 to 16, **characterised in that** the inlets (22, 220) for the flow medium (21) and/or the outlets (26, 260) for the permeate (27) and/or the outlets (29, 290) for the retentate (30) consist of metal.

18. Device according to Claim 17, **characterised in that** the metal is steel.

19. Device according to Claim 17, **characterised in that** the metal is titanium.

## Revendications

1. Dispositif (10) pour filtrer et séparer des fluides en écoulement (15) à l'aide de membranes (13) configurées comme des membranes à fibres creuses, en particulier par la méthode de l'ultrafiltration, de l'osmose inverse et de la nanofiltration, comprenant un orifice d'entrée (14) pour le fluide en écoulement (15) à séparer, introduit dans le dispositif (10), et un orifice de sortie (16) pour évacuer le perméat (17) produit dans le dispositif (10), et un orifice de sortie (18) pour le rétentat (19), qui forment pour l'essentiel une unité de séparation (11), un récipient (20) étant prévu, dans lequel sont logées l'une en aval de l'autre au moins deux unités de séparation (11), un orifice d'entrée (22) étant prévu pour envoyer le fluide en écoulement (21) à séparer vers les au moins deux unités de séparation (11), **caractérisé en ce que** chaque unité de séparation (11) comprend un carter (12), dans lequel sont disposées, entre deux plaques terminales (120, 121) à distance l'une de l'autre, les membranes (13) pouvant être configurées comme des membranes à fibres creuses ou aussi comme des membranes capillaires, et que, pour envoyer le fluide en écoulement (21) à séparer vers les tubes (122), comportant un alésage (123), traversant chacune des deux unités de séparation (11), tubes qui, par les alésages (123), communiquent avec l'intérieur du carter, il est prévu un orifice d'entrée commun (22), le rétentat (19) étant évacué au niveau de l'orifice de sortie (18) d'une première extrémité du tube (122), et le perméat (17) par les extrémités ouvertes des membranes à fibres creuses (13).

2. Dispositif selon la revendication 1, **caractérisé en ce que** le récipient (20) est configuré de telle sorte que les unités de séparation (11) soient disposées pour l'essentiel l'une derrière l'autre sur un axe (23) du récipient.

3. Dispositif selon l'une des revendications 1 ou 2, ou les deux, **caractérisé en ce que** l'orifice d'entrée (22) est, pour le fluide en écoulement (21) à séparer, disposé contre le récipient (20) de telle sorte que le fluide en écoulement (21) puisse être envoyé, à partir de ce dernier, simultanément tant dans l'une des unités de séparation (11) que dans l'autre unité de séparation (110).

4. Dispositif selon l'une ou plusieurs des revendications 1 à 3, **caractérisé en ce que** le récipient (20) est configuré d'une manière essentiellement tubulaire.

5. Dispositif selon l'une ou plusieurs des revendications 1 à 4, **caractérisé en ce que** le récipient (20) présente une section transversale pour l'essentiel circulaire.

6. Dispositif selon l'une ou plusieurs des revendications 1 à 5, **caractérisé en ce que** le récipient (20) est configuré comme un tube essentiellement linéaire.

7. Dispositif selon l'une ou plusieurs des revendications 1 à 6, **caractérisé en ce qu'**un orifice d'entrée (22, 220) pour le fluide en écoulement à séparer (21) est placé en amont de chacun des points (24, 240), essentiellement opposés, du récipient (20).

8. Dispositif selon la revendication 7, **caractérisé en ce que** les points (24, 240) correspondant aux orifices d'entrée (22, 220), sont, par rapport à l'extension longitudinale (25) du récipient (20), positionnés essentiellement en position centrale.

9. Dispositif selon l'une ou plusieurs des revendications 1 à 8, **caractérisé en ce que** les orifices de sortie (26, 260) pour le perméat (27) sont disposés au niveau d'extrémités (28, 280) pour l'essentiel opposées du récipient (20).

10. Dispositif selon l'une ou plusieurs des revendications 1 à 9, **caractérisé en ce que** les orifices de sortie (29, 290) pour le rétentat (30) sont disposés, dans la zone des extrémités essentiellement opposées (28, 280), essentiellement perpendiculairement au carter (31) du récipient.

11. Dispositif selon l'une ou plusieurs des revendications 1 à 10, **caractérisé en ce que** le récipient (20) est constitué d'un matériau plastique.

12. Dispositif selon la revendication 11, **caractérisé en ce que** le matériau plastique est une matière plastique renforcée par des fibres de carbone et/ou des fibres de verre.

13. Dispositif selon l'une ou plusieurs des revendications 1 à 12, **caractérisé en ce que** le carter (12) et/ou des éléments d'obturation (120, 121), disposés des deux côtés, de l'unité de séparation (11) sont en métal.

14. Dispositif selon la revendication 13, **caractérisé en ce qu'**au moins les éléments d'obturation (120, 121) disposés des deux côtés sont en titane.

15. Dispositif selon l'une ou plusieurs des revendications 1 à 14, **caractérisé en ce que** le carter (31) du récipient peut être subdivisé en au moins deux éléments de carter de récipient (310, 311), qui sont reliés l'un à l'autre par des moyens d'assemblage.

16. Dispositif selon la revendication 15, **caractérisé en ce que** les moyens d'assemblage sont des zones filetées ou des assemblages à baïonnette, réalisés sur les éléments (310, 311) du carter du récipient.

17. Dispositif selon l'une ou plusieurs des revendications 1 à 16, **caractérisé en ce que** les orifices d'entrée (22, 220) pour le fluide en écoulement (21) et/ou les orifices de sortie (26, 260) pour le perméat (27) et/ou les orifices de sortie (29, 290) pour le rétentat (30), sont en métal.

18. Dispositif selon la revendication 17, **caractérisé en ce que** le métal est l'acier.

19. Dispositif selon la revendication 17, **caractérisé en ce que** le métal est le titane.
